(19) **Europäisches Patentamt / European Patent Office / Office européen des brevets**

(11) **EP 4 112 696 B1**

(12) **EUROPEAN PATENT SPECIFICATION**

(45) Date of publication and mention of the grant of the patent:
**06.05.2026 Bulletin 2026/19**

(21) Application number: **21759735.0**

(22) Date of filing: **24.02.2021**

(51) International Patent Classification (IPC):
$C08G\ 63/183^{(2006.01)}$   $C08G\ 63/199^{(2006.01)}$
$C08G\ 63/20^{(2006.01)}$   $C08G\ 63/83^{(2006.01)}$
$C08G\ 63/85^{(2006.01)}$   $C09D\ 167/02^{(2006.01)}$
$C09J\ 167/02^{(2006.01)}$   $C08G\ 18/10^{(2006.01)}$
$C08G\ 18/22^{(2006.01)}$   $C08G\ 18/30^{(2006.01)}$
$C08G\ 18/42^{(2006.01)}$   $C08G\ 18/79^{(2006.01)}$
$C09D\ 175/06^{(2006.01)}$

(52) Cooperative Patent Classification (CPC):
(C-Sets available)
C08G 63/183; C08G 18/10; C08G 18/222;
C08G 18/307; C08G 18/4213; C08G 18/792;
C08G 63/199; C08G 63/20; C08G 63/83;
C08G 63/85; C09D 167/02; C09D 175/06;
C09J 167/02                          (Cont.)

(86) International application number:
**PCT/JP2021/006846**

(87) International publication number:
**WO 2021/172349 (02.09.2021 Gazette 2021/35)**

(54) **POLYESTER RESIN CONTAINING FEWER FOREIGN SUBSTANCES, AND COATING COMPOSITION OR ADHESIVE COMPOSITION USING SAME**

WENIGER FREMDSTOFFE ENTHALTENDES POLYESTERHARZ UND BESCHICHTUNGSZUSAMMENSETZUNG ODER KLEBSTOFFZUSAMMENSETZUNG DAMIT

RÉSINE DE POLYESTER CONTENANT MOINS DE SUBSTANCES ÉTRANGÈRES, ET COMPOSITION DE REVÊTEMENT OU COMPOSITION ADHÉSIVE L'UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.02.2020 JP 2020030295**

(43) Date of publication of application:
**04.01.2023 Bulletin 2023/01**

(73) Proprietor: **TOYOBO MC Corporation
Osaka-shi, Osaka 530-0001 (JP)**

(72) Inventors:
• **MIURA, Wataru
Otsu-shi, Shiga 520-0292 (JP)**
• **NOMURA, Yumi
Tsuruga-shi, Fukui 914-8550 (JP)**

(74) Representative: **Müller-Boré & Partner
Patentanwälte PartG mbB
Friedenheimer Brücke 21
80639 München (DE)**

(56) References cited:
CN-A- 107 163 232        JP-A- 2004 075 787
JP-A- 2005 350 506        JP-A- 2005 523 961
JP-A- 2013 502 469        JP-A- 2017 002 158
JP-A- H0 641 288          JP-A- H08 509 764
JP-B1- S 401 958          US-A- 5 385 773
US-A1- 2003 204 043       US-A1- 2012 161 358

(52) Cooperative Patent Classification (CPC): (Cont.)

C-Sets
**C08G 18/10, C08G 18/307**

## Description

Technical Field of the Invention

The present invention relates to a method for producing a polyester resin containing fewer foreign bodies. More specifically, the present invention relates to a method for producing a polyester resin suitable for a dry lamination adhesive for a metal substrate, suitable for a coating material for a precoated metal, and suitable for a can coating material.

Background Art

Conventionally, a titanium compound or a zinc compound has been used as a catalyst for industrially producing a polyester resin from a dicarboxylic acid or an ester-forming derivative thereof and a diol component (for example, Patent Documents 1 and 2). However, such a conventional technique has such a problem that when the amount of the catalyst is increased in order to increase the polymerization activity, there are caused gelation during polymerization and deterioration of thermal stability, storage stability, and color tone of the resulting polyester resin.

Patent Document 3 discloses that by limiting the addition amounts of titanium and zinc catalysts, gelation can be suppressed in a reaction step, polycondensation can be efficiently performed without scattering of low molecular weight substances during the polycondensation, and a polyester excellent in thermal stability (suppression of black foreign bodies and gelation) can be produced.

Patent document 4 discloses (Example 5) a method for preparing a polyester resin wherein (i) a PBAT prepolymer is prepared in the presence of a Ti catalyst and in the absence of a Zn catalyst, followed by (ii) the polycondensation of the prepolymer and L-lactide in the presence of a Ti catalyst and a Zn catalyst.

Prior Art Documents

Patent Documents

Patent Document 1: JP 2003-268087 A
Patent Document 2: JP 2000-159872 A
Patent Document 3: JP 2009-001656 A
Patent Document 4: CN 107 163 232 A

Disclosure of the Invention

Problem that the Invention is to Solve

However, in Patent Document 3, a zinc salt, which is a foreign body generated by a reaction of a zinc catalyst with a carboxylic acid as a raw material, is not taken into consideration, and there is a problem that a zinc-derived foreign bodies are precipitated as an insoluble substance when the polyester resin is dissolved in a solvent or dispersed in water. More specifically, when foreign bodies are precipitated, there is a problem that defects derived from the foreign bodies occur during varnish coating. For example, poor appearance of a coating film occurs in precoated metal and can coating applications, and poor adhesion to a substrate occurs in dry lamination adhesive applications for metal substrates.

The present invention has been made in view of these problems of the prior art. That is, an object of the present invention is to provide a method for producing a polyester resin having good producibility and color tone, containing fewer foreign bodies, and showing good adhesion to a metal substrate and curability.

The present inventors have accomplished the present invention as a result of their extensive studies for solving the above problems. Thus, the present invention which is set out in the appended claims consists of the following constitution.

A method for producing a polyester resin containing 2 to 10 ppm by mass of titanium in terms of metal and 50 to 100 ppm by mass of zinc in terms of metal, as measured in accordance with the method specified herein, respectively, in which the number of foreign bodies contained in the polyester resin is 15 or less per 5 g of the polyester resin, as measured in accordance with the method specified herein, wherein the foreign bodies contain 100% by mass of a zinc salt of a polycarboxylic acid and the major axis of the foreign bodies is 5 $\mu$m or more and 80 $\mu$m or less, the method comprising a step of producing a prepolymer in the presence of a titanium catalyst and in the absence of a zinc catalyst, and a step of performing polycondensation in the presence of the titanium catalyst and the zinc catalyst after the production of the prepolymer.

The reduced viscosity of the polyester resin is preferably 0.10 dl/g or more and the acid value is preferably 50 eq/t or more, as measured in accordance with the method specified herein, respectively. In addition, the content of trimellitic anhydride in the polyester resin is preferably 1,000 ppm by mass or less.

Advantages of the Invention

According to the present invention, it is possible to produce a polyester resin having good producibility and color tone, containing fewer foreign bodies, and showing excellent adhesion to metal and curability. Suitably, the polyester resin to be produced by the production method of the present invention may be used for providing a polyester resin composition containing the polyester resin and an isocyanate curing agent or a phenol curing agent.

Brief Description of the Drawing

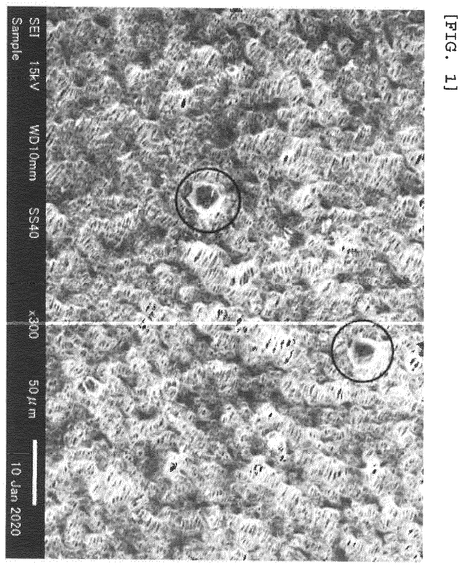

FIG. 1 is a scanning electron microscope (SEM) photograph of foreign bodies contained in a polyester resin. Best Mode for Carrying Out the Invention
As hereinafter, the present invention will be illustrated in detail.

<Polyester resin>

A polyester resin to be produced by the production method of the present invention is required to contain titanium in an amount of 2 ppm by mass or more and 10 ppm by mass or less in terms of metal. The content of titanium is preferably 3 ppm by mass or more, more preferably 4 ppm by mass or more, and further preferably 5 ppm by mass or more, from the viewpoint of enhancing the producibility, easiness in obtaining a high molecular weight polyester resin, and improving the solid storage stability and adhesion to metal. In addition, the content of titanium is preferably 9 ppm by mass or less, more preferably 8 ppm by mass or less, and further preferably 7 ppm by mass or less, from the viewpoint of improving the color tone of the polyester resin.
A polyester resin to be produced by the production method of the present invention is required to contain zinc in an amount of 50 ppm by mass or more and 100 ppm by mass or less in terms of metal. The content of zinc is preferably 55 ppm by mass or more, and more preferably 60 ppm by mass or more, from the viewpoint of improving the curability of the polyester resin, particularly curability (reactivity) with an isocyanate curing agent. In addition, the content of zinc is preferably 95 ppm by mass or less, and more preferably 90 ppm by mass or less, from the viewpoint of suppressing the generation of zinc-derived foreign bodies, improving the color tone of the polyester resin, improving the dissolution stability, and reducing the amount of foreign bodies.
In the polyester resin to be produced by the production method of the present invention, the content of antimony is preferably 10 ppm by mass or less in terms of metal. The content of antimony is preferably small. Specifically, the content of antimony is preferably 5 ppm by mass or less, more preferably 1 ppm by mass or less, and further preferably 0 ppm by mass, from the viewpoint of suppressing the generation of foreign bodies containing antimony metal.
In the present invention, the titanium content and the zinc content in the polyester resin are values obtained from analysis by a dry ashing and acidolysis method, and the antimony content is a value obtained from analysis by an yttrium nitrate method (nitrate ashing method).
Titanium and zinc contained in the polyester resin may be contained as a single-element metal or may be contained as a compound. Either case is possible as long as a predetermined amount of titanium or zinc in terms of metal is contained. It is preferable that the composition be the same as that of a catalyst for polymerizing the polyester resin.
Examples of the titanium compound include titanium halide compounds such as titanium tetrafluoride, titanium tetrachloride, titanium tetrabromide, titanium tetraiodide, and hexafluorotitanic acid; titanic acid compounds such as $\alpha$-titanic acid, $\beta$-titanic acid, ammonium titanate, sodium titanate, peroxotitanic acid complexes, and anatase; inorganic acid salt compounds of titanium such as titanium sulfate, titanium nitrate, titanium phosphate, and titanium silicate; titanium organic metal compounds such as tetramethyltitanium, tetraethyltitanium, tetrabenzyltitanium, tetraphenyltitanium, and bis(cyclopentadienyl)titanium dichloride; aryloxytitanium compounds such as tetraphenoxytitanium; siloxytitanium compounds such as tetrakis(trimethylsiloxy)titanium and tetrakis(triphenylsiloxy)titanium; organic acid salt compounds of titanium such as titanium acetate, titanium propionate, titanium lactate, titanium citrate, titanium tartrate, titanium potassium oxalate, titanium organosulfonates, and titanium organophosphates; titanium amide compounds such as tetrakis(diethylamino)titanium and titanium tetrapyrrolide; titanium tetraalkoxides such as titanium tetramethoxide, titanium tetraethoxide, titanium tetra-n-propoxide, titanium tetraisopropoxide, titanium tetra-n-butoxide, and titanium tetra-2-ethylhexoxide; condensed titanium alkoxides such as poly(dibutyl titanate), $Ti_7O_4(OC_2H_5)_{20}$, and $Ti_{16}O_{16}(OC_2H_5)_{32}$; halogen-substituted titanium alkoxides such as chlorotitanium triisopropoxide and dichlorotitanium diethoxide; carboxylic acid group-substituted titanium alkoxides such as titanium acetate triisopropoxide and titanium methacrylate triisopropoxide; phosphonic acid group-substituted titanium alkoxides such as titanium tris(dioctylpyrophosphate) isopropoxide and titanium (monoethylphosphate) triisopropoxide; sulfonic acid group-substituted titanium alkoxides such as titanium tris(dodecylbenzenesulfonate) isopropoxide; alkoxy titanates such as ammonium hexaethoxy titanate, sodium hexaethoxy titanate, potassium hexaethoxy titanate, and sodium hexa-n-propoxy titanate; β-diketonate-substituted titanium alkoxides such as titanium bis(2,4-pentanedionate) diisopropoxide and titanium bis(ethylacetoacetate) diisopropoxide; α-hydroxycarboxylic acid-substituted titanium alkoxides such as titanium bis (ammonium lactate) diisopropoxide; and amino alcohol-substituted titanium alkoxides such as titanium bis(triethanolamine) diisopropoxide and 2-aminoethoxytitanium triisopropoxide. Among them, tetra-n-butyl titanate is preferable.

Examples of the zinc compound include single-element zinc such as zinc powder, organic acid salts of zinc such as zinc acetate and acetylacetonate of zinc, inorganic acid salts of zinc such as zinc carbonate, zinc chloride, zinc nitrate, zinc phosphate, zinc sulfate, zinc borate, and zinc aluminate, other organic zinc compounds such as dimethylzinc and diethylzinc, and other inorganic zinc compounds such as zinc oxide, zinc sulfide and zinc chloride. Among them, zinc acetate dihydrate is preferable.

According to the present invention, the foreign bodies contain 100% by mass of a zinc salt of a polycarboxylic acid. Specifically, the foreign bodies in the present invention are zinc salts of polycarboxylic acids which are raw materials for the polyester resin. Specific examples thereof include a zinc salt of terephthalic acid, a zinc salt of isophthalic acid, a zinc salt of orthophthalic acid, and/or a zinc salt of trimellitic acid. In particular, the foreign bodies in the present invention contain a zinc salt of terephthalic acid, a zinc salt of isophthalic acid, and/or a zinc salt of trimellitic acid as main components.

In the polyester resin to be produced by the production method of the present invention, the number of the foreign bodies contained in the polyester resin is 15 or less per 5 g of the polyester resin (hereinafter also referred to as "15 pieces/5 g"). The number of the foreign bodies is preferably small, preferably 14 (14 pieces/5 g) or less, more preferably 12 (12 pieces/5 g) or less, further preferably 10 (10 pieces/5 g) or less, furthermore preferably 9 (9 pieces/5 g) or less, and particularly preferably 8 (8 pieces/5 g) or less. The lower limit is not particularly limited. One (1 piece/5 g) or more is industrially acceptable, and even two (2 pieces/5 g) or more is also acceptable.

The number of the foreign bodies is measured by dissolving 5 g of the polyester resin in 100 mL of a mixed solvent of phenol/tetrachloroethane (60/40 (mass ratio)), filtering the prepared solution through a membrane filter having a pore size of 0.5 $\mu$m, observing (visually observing) the obtained residue with a SEM, and counting the number of foreign bodies therein. FIG. 1 is a SEM photograph of the residue, wherein portions marked with circles indicate foreign bodies.

As to the foreign body analysis means in the present invention, SEM-EDX (SEM-Energy Dispersive X-ray Spectroscopy) is used. By using such analysis means, organic substances such as a gel or impurities derived from a metal species other than zinc can be suitably discriminated from the foreign bodies containing a zinc salt of a polycarboxylic acid.

According to the present invention, the major axis of the foreign bodies is 5 $\mu$m or more, preferably 8 $\mu$m or more, and more preferably 10 $\mu$m or more. Further, according to the present invention, the major axis of the foreign bodies is 80 $\mu$m or less, preferably 70 $\mu$m or less, and more preferably 60 $\mu$m or less. In the polyester resin to be produced by the production method of the present invention, the number of the foreign bodies having a major axis in the above range is reduced to 15 pieces/5 g or less.

Since the number of the foreign bodies in the polyester resin to be produced by the production method of the present invention is a predetermined level or less, defects derived from the foreign bodies do not occur during varnish (polyester resin composition) coating. For example, in applications of a precoated metal and a can coating material, there is no occurrence of poor appearance of a coating film, and in applications of a dry lamination adhesive for a metal substrate, there is no occurrence of poor adhesion to a substrate.

The polyester resin to be produced by the production method of the present invention is preferably a polyester containing a polycarboxylic acid component and a polyhydric alcohol component as copolymerization components.

Examples of the dicarboxylic acid component include aromatic dicarboxylic acids, aliphatic dicarboxylic acids, unsaturated aliphatic dicarboxylic acids, and alicyclic dicarboxylic acids. Examples of the aromatic dicarboxylic acid include terephthalic acid, isophthalic acid, orthophthalic acid, 2,6-naphthalenedicarboxylic acid, 1,5-naphthalenedicarboxylic acid, 5-sodium sulfoisophthalic acid, 5-lithium sulfoisophthalic acid, 2-sodium sulfoterephthalic acid, 4,4'-diphenylmethane dicarboxylic acid, 4,4'-diphenyl ether dicarboxylic acid, 4,4'-biphenyldicarboxylic acid, and 4,4'-stilbenedicarboxylic acid. These may be used singly or in combination of two or more kinds thereof. The aliphatic dicarboxylic acid is not particularly limited, and examples thereof include pimelic acid, suberic acid, adipic acid, azelaic acid, sebacic acid, dodecanedioic acid, and dimer acid. These may be used singly or in combination of two or more kinds thereof. Examples of the unsaturated aliphatic dicarboxylic acid include fumaric acid, maleic acid, itaconic acid, hexahydrophthalic acid, and tetrahydrophthalic acid. Examples of the alicyclic dicarboxylic acid include 1,2-cyclohexanedicarboxylic acid, 1,3-cyclohexanedicarboxylic acid, and 1,4-cyclohexanedicarboxylic acid. Among them, aromatic dicarboxylic acids or aliphatic dicarboxylic acids are preferable. As to aromatic dicarboxylic acids, terephthalic acid or isophthalic acid is more preferable. As to aliphatic dicarboxylic acids, sebacic acid is more preferable.

When the total polycarboxylic acid component in the polyester resin is taken as 100% by mol, the content of the aromatic dicarboxylic acid is preferably 50% by mol or more, more preferably 60% by mol or more, and further preferably 70% by mol or more. Here, when an acid anhydride or the like is after-added (acid addition) after polymerization of polyester for imparting an acid value, the total amount of the polycarboxylic acid component and the polyhydric alcohol component may exceed 200% by mol. In this case, the total amount of the composition excluding the after-added components such as acid anhydride is taken as 200% by mol, and the calculation is performed based thereon.

In addition, a tri- or higher functional polycarboxylic acid can also be used. Examples of the tri- or higher functional polycarboxylic acid component include polycarboxylic acids such as trimellitic acid, pyromellitic acid, benzophenonetetracarboxylic acid, biphenylsulfonetetracarboxylic acid, and biphenyltetracarboxylic acid and anhydrides thereof. These tri- or higher functional polycarboxylic acid components may be used singly or in combination of two or more kinds thereof. Among them, trimellitic acid or trimellitic anhydride is preferable.

Examples of the glycol component include aliphatic glycols, alicyclic glycols, aromatic glycols, and polyalkylene glycols. Specifically, aliphatic glycols such as ethylene glycol, 1,2-propanediol, 1,3-propanediol, 1,2-butanediol, 1,3-butanediol, 1,4-butanediol, 2-methyl-1,3-propanediol, 2,2-diethyl-1,3-propanediol, 2-ethyl-2-methyl-1,3-propanediol, 2-butyl-2-ethyl-1,3-propanediol, neopentyl glycol (NPG), 3-methyl-1,5-pentanediol, 1,5-pentanediol, 1,6-hexanediol, 1,7-heptanediol, 1,8-octanediol, 1,9-nonanediol, 1,10-decanediol, dimethyloltricyclodecane, diethylene glycol, triethylene glycol, dipropylene glycol, and tripropylene glycol; alicyclic glycols such as 1,2-cyclohexanedimethanol, 1,3-cyclohexanedimethanol, and 1,4-cyclohexanedimethanol; aromatic glycols such as bisphenol A, bisphenol S, bisphenol C, bisphenol Z, bisphenol AP, and 4,4'-biphenol, and ethylene oxide adducts or propylene oxide adducts thereof; and polyalkylene glycols such as polyethylene glycol and polypropylene glycol. These glycol components may be used singly or in combination of two or more kinds thereof. Among them, aliphatic glycols or alicyclic glycols are preferable. As to aliphatic glycols, ethylene glycol or neopentyl glycol is preferable. As to alicyclic glycols, 1,4-cyclohexanedimethanol is preferable.

In addition, a tri- or higher functional polyhydric alcohol can also be used. Examples of the tri- or higher functional polyhydric alcohol component include glycerin, trimethylolethane, trimethylolpropane, mannitol, sorbitol, pentaerythritol, and $\alpha$-methylglucoside. These tri- or higher functional polyhydric alcohol components may be used singly or in combination of two or more kinds thereof.

When the total polycarboxylic acid component in the polyester resin is taken as 100% by mol, the content of the aliphatic glycol is preferably 50% by mol or more, more preferably 60% by mol or more, and further preferably 65% by mol or more.

As to the glycol component, a biomass-derived glycol can also be used. The biomass-derived glycol component is not particularly limited, but ethylene glycol or neopentyl glycol can be used. For example, biomass-derived ethylene glycol is obtained by using ethanol produced using biomass (biomass ethanol) as a raw material. For example, biomass-derived ethylene glycol can be obtained by a conventionally known method such as a method of producing ethylene glycol from biomass ethanol via ethylene oxide. In addition, commercially available biomass ethylene glycol may be used. For example, biomass ethylene glycol commercially available from India Glycols Ltd. and biomass neopentyl glycol (Neeture series, N20, N40, and N100) commercially available from Perstorp can be suitably used.

As to the method for producing the polyester resin, a method of performing an esterification reaction (hereinafter also referred to as an esterification step) and then performing a polycondensation reaction (hereinafter also referred to as a polycondensation step) is adopted. That is, in the esterification step, the dicarboxylic acid and the diol component are subjected to an esterification reaction preferably at 150 to 250°C. In the esterification step, a low molecular weight prepolymer (oligomer) or the like is produced. The reaction temperature in the esterification step is more preferably 160 to 245°C and further preferably 180 to 240°C. The reaction time is appropriately set depending on the reaction temperature and is preferably 1 to 10 hours and more preferably 2 to 8 hours. Next, in the polycondensation step, the polycondensation reaction is performed at preferably 230 to 300°C while the pressure in the system is reduced. The reaction temperature in the polycondensation step is more preferably 240 to 290°C and further preferably 250 to 280°C. The reaction time is also appropriately set depending on the reaction temperature and is preferably 0.5 to 5 hours and more preferably 1 to 3 hours. The degree of pressure reduction is preferably 10 mmHg or less, more preferably 5 mmHg or less, further preferably 1 mmHg or less, and particularly preferably 0.5 mmHg or less. The lower limit is not particularly limited, 0.01 mmHg or more is industrially acceptable, and even 0.05 mmHg or more is also acceptable. By the above production method, the aimed polyester resin is obtained.

The titanium catalyst is present in a predetermined amount in the polycondensation step. That is, generally, the titanium catalyst may be added during the esterification step, may be added before the polycondensation step after the completion of the esterification step, or may be added after the start of the polycondensation step. Herein, the titanium catalyst is added during the esterification step. The added amount of the titanium catalyst is proportional to the content of titanium contained in the polyester resin to be produced. Therefore, the content of titanium is 2 ppm by mass or more, preferably 3 ppm by mass or more, more preferably 4 ppm by mass or more, and further preferably 5 ppm by mass with respect to the polyester resin in terms of titanium metal. The content of titanium is also 10 ppm by mass or less, preferably 9 ppm by mass or less, more preferably 8 ppm by mass or less, and further preferably 7 ppm by mass or less.

The zinc catalyst is added in a predetermined amount during the polycondensation step (after completion of the esterification step). When the zinc catalyst is present during the esterification step, the zinc catalyst is apt to form a salt with an unreacted polycarboxylic acid, and foreign bodies containing a zinc salt of the polycarboxylic acid is apt to be generated. That is, the generation of foreign bodies can be suppressed by adding a predetermined amount of zinc catalyst in the polycondensation step. The added amount of the zinc catalyst is proportional to the content of zinc contained in the polyester resin to be produced. Therefore, the content of zinc is 50 ppm by mass or more, preferably 55 ppm by mass or more, and more preferably 60 ppm by mass or more with respect to the polyester resin in terms of zinc metal. The content of zinc is also 100 ppm by mass or less, preferably 95 ppm by mass or less, and more preferably 90 ppm by mass or less.

For imparting adhesion to metal to the polyester resin to be produced by the production method of the present invention and improving reactivity with a curing agent, the acid value of the polyester resin is preferably 40 eq/t or more, more preferably 50 eq/t or more, further preferably 60 eq/t or more, furthermore preferably 70 eq/t or more, and particularly preferably 100 eq/t or more. By setting the acid value within the above range, adhesion to metal and curability (curing rate) are improved. The upper limit of the acid value is not particularly limited but is preferably 400 eq/t or less, more preferably 300 eq/t or less, and further preferably 200 eq/t or less. Within the above range, the solid storage stability (reduced viscosity retention) of the polyester resin is improved.

An acid value may be imparted to the polyester resin to be produced by the production method of the present invention by any method. By imparting the acid value, effects such as improvement of curability with a curing agent and improvement of adhesion to a metal material may be obtained. Examples of the method for imparting an acid value include a depolymerization method in which a polycarboxylic anhydride is added in the late stage of the polycondensation step, and a method in which a polycarboxylic acid is added so as to increase the acid value at the stage of the prepolymer (oligomer) in the esterification step, and then this is subjected to a polycondensation reaction. The latter method of increasing the acid value in the esterification step is preferable because the amount of unreacted trimellitic anhydride and trimellitic acid contained (remaining) in the polyester resin can be reduced.

As to another method for imparting an acid value, there is a method of adjusting a molar ratio (diol component/dicarboxylic acid component) of the dicarboxylic acid component and the diol component (glycol component) to be charged in the esterification step. The molar ratio (diol component/dicarboxylic acid component) is preferably over 1.0 and 1.1 or less, and more preferably 1.01 or more and 1.08 or less. By setting the molar ratio to the above-mentioned lower limit or more, it is possible to increase the molecular weight of the polyester resin without causing poor polymerization. By setting the molar ratio to the above-mentioned upper limit or less, a prepolymer having a high acid value can be obtained, and an acid value can be imparted to the polyester resin. Furthermore, adhesion to metal and curability are improved.

The amount of the trimellitic anhydride component contained (remaining) in the polyester resin to be produced by the production method of the present invention is preferably 1,000 ppm by mass or less. Since the solution stability of the polyester resin is improved, the amount of the trimellitic anhydride component is more preferably 500 ppm by mass or less, further preferably 100 ppm by mass or less, furthermore preferably 50 ppm by mass or less, and particularly preferably 20 ppm by mass or less. When the amount is 1,000 ppm by mass or less, hydrolysis of the polyester resin by an acid is suppressed, and the dissolution stability of the polyester resin is improved. The amount of the trimellitic anhydride component contained in the polyester resin is preferably small. Therefore, the lower limit is not particularly limited, 1 ppm by mass or more is industrially acceptable, and even 2 ppm by mass or more is also acceptable. Here, the trimellitic anhydride component contained in the polyester resin mainly refers to a (unreacted) trimellitic anhydride component that has not reacted in the esterification step or the polycondensation step and may include, for example, trimellitic acid formed by a simple ring-opening reaction of trimellitic anhydride with water. That is, the amount of the trimellitic anhydride component is the total amount of trimellitic anhydride and trimellitic acid.

In the present invention, the content of the trimellitic anhydride component contained in the polyester resin can be measured by HPLC.

Although the reduced viscosity (symbol: $\eta$sp/c, unit: dl/g) of the polyester resin to be produced by the production method of the present invention is not particularly limited, 0.10 dl/g or more is preferable, and 0.40 dl/g or more is more preferable. When the reduced viscosity is 0.10 dl/g or more, the strength and adhesion to metal of the coating film of the adhesive composition containing the polyester resin are improved. In addition, handling at the time of coating and storage stability are improved. The reduced viscosity in the present invention is a value determined by the method described in Examples. Although the upper limit of reduced viscosity is not particularly limited, 2.00 dl/g or less is preferable, and 1.00 dl/g or less is more preferable. By setting the reduced viscosity to the above upper limit or less, the solvent solubility of the polyester resin is improved, and the dissolution stability is improved.

<Curing agent>

The curing agent preferably reacts with the polyester resin to be produced by the production method of the present invention so as to form a crosslinked structure. Examples thereof include a phenol curing agent and an isocyanate curing agent.

The phenol curing agent is preferably a resol type phenol resin synthesized from a phenol compound. Examples of the tri- or higher functional phenol compound include phenol, m-cresol, m-ethylphenol, 3,5-xylenol, m-methoxyphenol, bisphenol A, and bisphenol F. Examples of a bifunctional phenol compound include o-cresol, p-cresol, p-tert-butylphenol, p-ethylphenol, 2,3-xylenol, and 2,5-xylenol. These compounds have two or more functional groups capable of methylolation per molecule of the phenol compound, and can be synthesized by methylolation with formaldehyde or the like. These can be used singly or in combination of two or more kinds thereof.

The blending ratio of the tri- or higher functional phenol compound and the bifunctional phenol compound can be arbitrarily selected according to a required coating film (cured film) and is preferably 1/99 to 100/0 (parts by mass). For example, when the coating film requires hardness and acid resistance, the amount of the tri- or higher functional phenol compound is preferably more than 30 parts by mass, and when the coating film requires flexibility and the residual stress after processing is desired to be reduced, the amount of the tri- or higher functional phenol compound is preferably less than 50 parts by mass.

Examples of formaldehyde and the like used when the phenol compound is formed into a phenol resin include formaldehyde, paraformaldehyde, and trioxane. One kind or two or more kinds thereof can be used as a mixture.

Examples of the alcohol used for alkyl-etherifying a part of the methylol group of the methylolated phenol resin include monohydric alcohols having 1 to 8 carbon atoms, preferably 1 to 4 carbon atoms. Examples thereof include methanol, ethanol, n-propanol, n-butanol, isopropanol, isobutanol, and tert-butanol. Among them, n-butanol is preferable from the viewpoint of compatibility with a polyester resin and reaction curability.

The phenol resin has 0.3 or more alkoxymethyl groups on average, preferably 0.5 to 3 alkoxymethyl groups on average per phenol nucleus from the viewpoint of reactivity and compatibility with the polyester resin. If the number is less than 0.3, curability with the polyester resin may be poor, leading to deterioration of cured coating film strength. The upper limit is not particularly limited, but when it exceeds the above range, stability at the time of blending the curing agent may be deteriorated.

Examples of a method for obtaining the phenol resin in which the tri- or higher functional phenol compound and the bifunctional phenol compound are mixed include a method in which they are mixed at an arbitrary ratio before being formed into a phenol resin by formaldehyde and the like; and a method in which the tri- or higher functional phenol compound and the bifunctional phenol compound are separately formed into phenol resins and mixed at an arbitrary mixing ratio.

Examples of the isocyanate curing agent include diisocyanates including aromatic diisocyanates such as 2,4-tolylene diisocyanate, 2,6-tolylene diisocyanate, xylene-1,4-diisocyanate, xylene-1,3-diisocyanate, tetramethylxylene diisocyanate, 4,4'-diphenylmethane diisocyanate, 2,4'-diphenylmethane diisocyanate, 4,4'-diphenyl ether diisocyanate, 2-nitrodiphenyl-4,4'-diisocyanate, 2,2'-diphenylpropane-4,4'-diisocyanate, 3,3'-dimethyldiphenylmethane-4,4'-diisocyanate, 4,4'-diphenylpropane diisocyanate, m-phenylene diisocyanate, p-phenylene diisocyanate, naphthylene-1,4-diisocyanate, naphthylene-1,5-diisocyanate, and 3,3'-dimethoxydiphenyl-4,4'-diisocyanate; aromatic polyisocyanates such as polymethylene polyisocyanate and crude tolylene diisocyanate; aliphatic diisocyanates such as tetramethylene diisocyanate, hexamethylene diisocyanate (HDI), decamethylene diisocyanate, and lysine diisocyanate; and alicyclic diisocyanates such as isophorone diisocyanate (IPDI), hydrogenated tolylene diisocyanate, hydrogenated xylene diisocyanate, and hydrogenated diphenylmethane diisocyanate; as well as biuret products, uretdione-modified products, carbodiimide-modified products, isocyanurate-modified products, uretonimine-modified products, adducts with polyols, and mixed modified products thereof. These can be used singly, or two or more kinds thereof can be selected. It can also be used in the form of a urethane precursor such as a prepolymer, a modified product, a derivative, and a mixture composed of an isocyanate compound and an active hydrogen compound such as a polyol and a polyamine.

As to the isocyanate curing agent, a blocked isocyanate curing agent obtained by blocking the terminal NCO group of the isocyanate compound may be used. Examples of the blocking agent include phenolic compounds such as phenol, cresol, ethylphenol, and butylphenol; alcohol compounds such as 2-hydroxypyridine, butyl cellosolve, propylene glycol monomethyl ether, benzyl alcohol, methanol, ethanol, n-butanol, isobutanol, and 2-ethylhexanol; active methylene compounds such as dimethyl malonate, diethyl malonate, methyl acetoacetate, ethyl acetoacetate, and acetylacetone; mercaptan compounds such as butyl mercaptan and dodecyl mercaptan; acid amide compounds such as acetanilide and acetic acid amide; lactam compounds such as ε-caprolactam, δ-valerolactam, and γ-butyrolactam; imidazole compounds such as imidazole and 2-methylimidazole; urea compounds such as urea, thiourea, and ethylene urea; oxime compounds such as formamide oxime, acetaldoxime, acetone oxime, methyl ethyl ketoxime, methyl isobutyl ketoxime, and cyclohexanone oxime; and amine compounds such as diphenylaniline, aniline, carbazole, ethyleneimine, and polyethyleneimine. These can be used singly or in combination of two or more kinds thereof.

Such a reaction between the blocking agent and the isocyanate compound can be performed, for example, at 20 to 200°C, using a known inert solvent or catalyst depending on necessity. The amount of the blocking agent used is preferably 0.7 to 1.5 times of the amount of the terminal isocyanate group, in term of the molar amount.

The blending ratio of the polyester resin and the curing agent in the polyester resin composition is preferably 5 parts by mass or more of the curing agent and more preferably 10 parts by mass or more of the curing agent with respect to 100 parts by mass of the polyester resin in order to improve the solvent resistance of the cured coating film. In addition, the blending ratio of the curing agent is preferably 30 parts by mass or less and preferably 20 parts by mass or less in order to avoid a decrease in the strength of the cured coating film due to the remaining unreacted curing agent component.

A curing catalyst may be further added to the polyester resin composition. By containing the curing catalyst, the performance of the cured coating film can be improved. When the curing agent is a phenol resin, examples of the curing catalyst include sulfuric acid, p-toluenesulfonic acid, dodecylbenzenesulfonic acid, naphthalenesulfonic acid, dinonylnaphthalenesulfonic acid, dinonylnaphthalenedisulfonic acid, camphorsulfonic acid, phosphoric acid, and amine-blocked (partially neutralized by adding an amine) products thereof. These can be used singly or in combination of two or more kinds thereof. Dodecylbenzenesulfonic acid and a neutralized product thereof are preferable from the viewpoint of compatibility with the polyester resin and hygiene. When the curing agent is an isocyanate curing agent, examples of the curing catalyst include organotin compounds such as stannous octylate and dibutyltin dilaurate and triethylamine. These can be used singly or in combination of two or more kinds thereof.

The polyester resin composition is preferably a solvent type, and the solid content concentration thereof is preferably 20 to 60% by mass and more preferably 30 to 50% by mass. The solvent is used after production of the polyester resin or during preparation of the resin composition and is further used as a diluent during coating. The solvent that can be used is not particularly limited, and examples thereof include esters such as ethyl acetate, butyl acetate, and cellosolve acetate, ketones such as acetone, methyl ethyl ketone, methyl isobutyl ketone, and cyclohexanone, ethers such as tetrahydrofuran and dioxane, and aromatic hydrocarbons such as toluene and xylene. Among them, ethyl acetate or methyl ethyl ketone is usually preferably used from the viewpoint of price, productivity, safety, and the like.

The polyester resin to be produced by the production method of the present invention and the polyester resin composition containing the same are excellent in adhesion to metal, curability, and storage stability and thus can be suitably used for coating compositions and adhesive compositions. Examples of the coating material include those for metal substrate applications, and specific examples thereof include precoated metal (PCM) coating materials and can coating materials. Examples of the adhesive include an adhesive for dry lamination for bonding a metal substrate such as an aluminum foil to a plastic film.

Examples

Hereinafter, there are shown Examples in order to more specifically illustrate the present invention. However, the present invention is not limited by those Examples at all. Measured values mentioned in Examples were measured by the methods shown below. In Examples and Comparative Examples, an expression reading just "part(s)" stands for "part(s) by mass", and an expression regarding just "%" stands for "% by mass".

(1) Measurement of composition of resin

The polyester resin was dissolved in deuterated chloroform and subjected to $^1$H-NMR analysis using NMR apparatus 400-MR manufactured by VARIAN, Inc., and the molar ratio was determined from the integral value ratio.

(2) Quantitative determination of metal elements

<Dry ashing and acidolysis method (quantitative determination of titanium and zinc elements)>

In a platinum crucible, 0.5 g of a sample (polyester resin) was weighed and was preliminarily carbonized on a hot plate to 400°C. Thereafter, ashing treatment was performed at 550°C for 8 hours using an electric furnace FO610 manufactured by Yamato Scientific Co., Ltd. After ashing, 3 mL of 6.0 N hydrochloric acid was added, acidolysis was performed at 100°C on a hot plate, and a heat treatment was performed until hydrochloric acid was completely volatilized. After completion of the acidolysis, the volume was adjusted using 20 mL of 1.2 N hydrochloric acid. Thereafter, the treatment liquid was measured with a high-frequency inductively coupled plasma emission spectrometer (SPECTROBLUE manufactured by Hitachi High-Tech Science Corporation). Separately, a blank test was performed, and the amount of a metal element in the sample was quantified using a calibration curve produced with a standard solution of the target element. The amount of the metal element in the sample was determined by the following formula. The content of the element in 0.5 g of the sample can be determined as follows.

$$A = (B - C) \times 20/0.5$$

Content of element in sample: A (ppm by mass)
Concentration of element in pretreatment liquid: B (mg/L)
Concentration of element in blank test liquid (measurement blank): C (mg/L)

<Yttrium nitrate method (nitrate ashing method) (quantitative determination of antimony element)>

In a platinum crucible, 0.5 g of a sample (polyester resin) was weighed, 5 mL of a 5% ethanol solution of yttrium nitrate was added thereto, and the mixture was preliminarily carbonized on a hot plate to 400°C. Thereafter, ashing treatment was performed at 550°C for 8 hours using an electric furnace FO610 manufactured by Yamato Scientific Co., Ltd. After ashing, 20 mL of 1.2 N hydrochloric acid was added, so as to dissolve nitrate, and a resulting solution was used as a measurement solution. Measurement was performed with a high-frequency inductively coupled plasma emission spectrometer (SPECTROBLUE manufactured by Hitachi High-Tech Science Corporation). Separately, a blank test was performed, and the amount of a metal element in the sample was quantified using a calibration curve produced with a standard solution of the target element. The amount of the metal element in the sample was determined by the following formula. The content of the element in 0.5 g of the sample can be determined as follows.

$$A = (B - C) \times 20/0.5$$

Content of element in sample: A (ppm by mass)
Concentration of element in pretreatment liquid: B (mg/L)
Concentration of element in blank test liquid (measurement blank): C (mg/L)

The lower detection limit of the present method is 1 ppm by mass. Accordingly, and the measurement result less than the lower detection limit is expressed as <1 (ppm by mass).

(3) Producibility evaluation

In the present invention, the polymerization time is a time taken from a time point when conditions of a temperature of 260°C and a degree of vacuum of 0.3 mmHg or less are reached in the polycondensation step to a time point when the viscosity reaches a predetermined reduced viscosity ($\eta$sp/c >0.50 dl/g). When the polymerization time exceeded 100 minutes, the polycondensation step was completed, and the polyester resin was taken out.

(Assessment)

o: polymerization time ≦100 minutes
×: polymerization time >100 minutes

(4) Measurement of color tone (color b value, Co-b)

A polyester resin solution having a solid content of 30% by mass was prepared by dissolving the polyester resin in methyl ethyl ketone/toluene = 1/1 (mass ratio) at 25°C. The color b value of the polyester resin solution was measured using a petroleum product color meter (OME-2000 manufactured by Nippon Denshoku Industries Co., Ltd.).

(5) Measurement of number of foreign bodies

To 80 mL of a mixed solvent of phenol/tetrachloroethane (6/4 (mass ratio)) was added 5 g of the polyester resin, and the mixture was stirred at 135°C for 2 hours for dissolution. Next, the solution was filtered through a polytetrafluoroethylene (PTFE) filter having a pore size of 0.5 $\mu$m, the residue was then observed (visually observed) with SEM-EDX (JSM-6510A manufactured by JEOL Ltd.) (magnification: 100 times, signal: SEI (secondary electron image), focal length: 10 mm, applied voltage: 15 kV, vacuum mode: 0.1 mPa), and the number of foreign bodies was counted.

When a large amount of foreign bodies was present on the entire surface of the filter and counting was difficult, it was rated as "×".

(6) Measurement of reduced viscosity ($\eta$sp/c, unit: dl/g) (initial value)

In a mixed solvent of phenol/tetrachloroethane (6/4 (mass ratio)), 0.1 g $\pm$ 0.005 g of a sample of the polyester resin was dissolved at about 50°C, and the solution was made up with a 25 mL measuring flask so as to prepare a sample solution. The sample solution was then placed in a viscosity tube and placed in a water bath at 30°C for 15 to 20 minutes until the temperature of the sample solution reached 30°C. As soon as the temperature of the sample solution reached a predetermined temperature, the number of seconds of dropping was measured while confirming the marked line of the viscosity tube. The reduced viscosity (unit: dl/g) was calculated from the difference between the number of seconds of dropping of sample solution and the number of seconds of dropping of the blank solvent. The calculation formula is shown in Equation 1.

{(number of seconds of dropping of sample solution) - (number of seconds of dropping of blank) }/ (number of seconds of dropping of blank)/(mass of polyester resin × 100/25)     Equation 1:

(7) Measurement of acid value (AV, unit: eq/t)

In 40 ml of chloroform, 0.2 g of a sample of the polyester resin was dissolved, and the resulting solution was titrated with a 0.01 N ethanol solution of potassium hydroxide so as to determine an equivalent per $10^6$ g (eq/t) of the polyester resin. Phenolphthalein was used as an indicator.

(8) Solid storage stability (reduced viscosity retention)

The polyester resin was stored in a polyethylene bag at a temperature of 40°C and a humidity of 50% for 3 months. Then, it was confirmed whether a decrease in molecular weight was occurred or not. The molecular weight decrease was evaluated by the reduced viscosity retention.

Reduced viscosity retention (%) = (reduced viscosity of polyester resin after storage for 3 months)/ (reduced viscosity of polyester resin at initial stage) × 100

The reduced viscosity at the start of storage is taken as the initial value.

(9) Dissolution stability

The polyester resin was dissolved in ethyl acetate to a solid content of 30% by mass so as to prepare a resin solution. The resin solution was stored in a standing state at a temperature of 40°C and a humidity of 50% for 3 months. Then, it was confirmed whether the resin solution was hazy or not.

(Assessment)

     o: There is no haze in the resin solution.
     ×: There is some haze in the resin solution.

(10) Adhesion to metal

<Production of laminate>

A three-layer laminate of a polyethylene terephthalate film (PET: E5107 manufactured by Toyobo Co., Ltd., 25 μm)/a polyester resin layer (thickness: 5 μm)/an aluminum foil (thickness: 9 μm) was produced by the method described below. First, the polyester resin was dissolved in methyl ethyl ketone so as to have a solid content concentration of 30% by mass to obtain a polyester resin solution. Next, the polyester resin solution was applied to a corona-treated surface of the PET film with an applicator at room temperature so that the coating thickness of the polyester resin solution after drying would be 5 μm, and the solvent was volatilized with a hot air dryer at 120°C for 30 seconds. Thereafter, the applied surface was superposed on the aluminum foil, and bonding was performed by a dry lamination method at a roll temperature of 120°C, a roll load of 0.3 MPa, and a speed of the object to be pressure-bonded of 1 m/min so as to prepare the three-layer laminate. The obtained laminate was cut into a width of 25 mm.

<Adhesive strength>

The adhesive strength between the aluminum foil and the PET film constituting the three-layer laminated film was measured using a tensile tester. The ambient temperature during the measurement was set to 25°C, and the peeling rate was set to 100 mm/min. The tensile strength at the time of peeling by the 90° peeling method was taken as the adhesive strength. The unit of the adhesive strength was N/25 mm. The results are shown in Table 1.

(Assessment)

    o: 5 N/25 mm or more
    Δ: 3 N/25 mm or more and less than 5 N/25 mm
    ×: less than 3 N/25 mm

(11) Phenol curability

<Production of test piece>

A polyester resin solution having a solid content of 40% by mass was prepared by dissolving the polyester resin in cyclohexanone/Solvesso 150 = 1/1 (mass ratio). Next, 42.5 parts of the polyester resin solution, 5 parts of a resol type phenol resin (PR-521 manufactured by Allnex, solid content: 60% by mass) as a curing agent, and 2 parts of dodecylbenzenesulfonic acid (Nacure (Registered Trademark) 5076 manufactured by King Industries, Inc., solid content: 1% by mass) as a catalyst were blended and then diluted with cyclohexanone/Solvesso 150 = 1/1 (mass ratio) until the viscosity thereof reached a suitable level for coating, thereby obtaining a phenol curing agent blend.

The phenol curing agent blend was applied to one surface of a tinplate (JIS G 3303 (2008) SPTE, 70 mm × 150 mm × 0.3 mm) with a bar coater so that the film thickness after drying would be 10 ± 2 μm and subjected to curing and baking under baking conditions of 240°C (PMT: maximum temperature reached by the substrate) × 1 minute so as to obtain a test piece (hereinafter referred to as a test piece).

<Evaluation of curability>

A gauze felt immersed in methyl ethyl ketone was pressed against the cured film surface of the test piece so that the contact area would be 1 cm$^2$, and a load of 500 g was applied thereto to perform a rubbing test. The number of times until the cured film was peeled off (one round trip is referred to as one time) was evaluated according to the following criteria.

(Assessment)

    o: The coating film was not peeled off even after 50 times or more, and no change was observed in the coating film.
    Δ: After 20 to 49 times, the coating film was peeled off, and the tinplate was exposed.
    ×: After 19 times or less, the coating film was peeled off, and the tinplate was exposed.

(12) Isocyanate (NCO) curability

<Production of test sample>

A polyester resin solution having a solid content of 30% by mass was prepared by dissolving the polyester resin in methyl ethyl ketone. Next, 1 part of an isocyanurate of hexamethylene diisocyanate (DESMODUR (Registered Trademark) N3300 manufactured by Covestro AG, solid content: 30% by mass) was blended as a curing agent with respect to 10 parts of the polyester resin solution so as to obtain an isocyanate curing agent blend.

The isocyanate curing agent blend was applied onto a polyethylene terephthalate film (PET film) so as to have a thickness of 30 μm after drying, dried with hot air at 100°C for 90 seconds, and then kept (aged) at 40°C for 3 days so as to produce a sample for a curability test.

<Evaluation of curability>

The sample for the curability test was immersed in a solution of methyl ethyl ketone/toluene = 1/1 (mass ratio) at room temperature for 1 hour such that the entire sample was immersed. Then, the gel fraction was determined from the remaining amount that was not dissolved by the following formula.

Gel fraction (%) = [(mass of sample for curability test after immersion) - (mass of PET film)]/[(mass of sample for curability test before immersion) - (mass of PET film)] $\times$ 100

(Assessment)

o: 80% or more
$\Delta$: 20% or more and less than 80%
$\times$: less than 20%

(13) Trimellitic anhydride component (unreacted TMA)

<Preparation of sample>

1. In 2 ml of chloroform, 100 mg of the polyester resin was dissolved.
2. To the solution, 18 ml of acetonitrile was added to perform reprecipitation, and the mixture was centrifuged.
3. After 2 ml of the centrifuged supernatant was dried and solidified (the solvent was completely distilled off), the product was dissolved in 250 $\mu$l of DMF (N,N-dimethylformamide) so as to prepare a sample.
4. Measurement was performed under the following conditions using a high-performance liquid chromatograph (HPLC) .

<HPLC measurement conditions>

Apparatus: ACQUITY UPLC (manufactured by Waters)
Column: BEH-C18 2.1 $\times$ 150 mm (manufactured by Waters)
Mobile phase: Eluent A: 0.1% Aqueous solution of formic acid (v/v)
Eluent B: Acetonitrile
Gradient B%: 5 $\to$ 98 $\to$ 98% (0 $\to$ 25 $\to$ 35 minutes)
Flow rate: 0.2 ml/min
Column temperature: 40°C
Detector: UV-258 nm

<Quantitative determination method>

Under the analytical conditions of HPLC described above, each unreacted acid component is measured, the elution time is determined, and the peak area value of each component is measured. Next, the sample is measured under the analysis conditions of HPLC described above, and the amount of the unreacted acid component is calculated (absolute calibration method) from the ratio of the peak area value of the obtained chromatogram to the peak area value of the standard.

<Example 1>

A reaction vessel equipped with a stirrer, a condenser, and a thermometer was charged with 233.0 parts of terephthalic acid, 532.1 parts of isophthalic acid, 13.5 parts of trimellitic anhydride, 155.3 parts of ethylene glycol, 260.5 parts of neopentyl glycol, and 0.0023% by mol of tetra-n-butyl titanate (hereinafter may be abbreviated as TBT) as a catalyst with respect to all acid components. Next, an esterification reaction (esterification step) was carried out while raising the temperature from 180°C to 240°C over 4 hours (total polyhydric alcohol components charged/total polycarboxylic acid components = 1.07 (molar ratio)). Next, 0.023% by mol of zinc acetate dihydrate was charged with respect to the total acid components. Next, the pressure in the system was gradually reduced to 5 mmHg over 20 minutes, and a polycondensation reaction (polycondensation step) was further performed at 260°C for 80 minutes under a vacuum of 0.3 mmHg or less. The obtained polyester resin (1) was subjected to composition analysis by NMR. As a result, the molar ratio of the polycarboxylic acid components was terephthalic acid/isophthalic acid/trimellitic acid = 30.0/68.5/1.5 (% by mol). The molar ratio of the polyhydric alcohol components was ethylene glycol/neopentyl glycol = 50.0/50.0. The reduced viscosity was 0.63 (dl/g). The acid value was 55 (eq/t). The metal content was 5 (ppm by mass) for titanium, and 71 (ppm by mass) for zinc. The results of the performance evaluation are shown in Table 1.

<Examples 2 to 5, 8 & 9, and Comparative Examples 2 to 4>

The polyhydric alcohol components and the polycarboxylic acid components were charged in the same manner as in Example 1 so as to produce a polyester resin. However, the blending ratio of the metal catalyst was changed so that a predetermined amount with respect to the polyester resin is obtained. The composition of the resin, physical properties of the resin, and evaluation results are shown in Table 1.

<Examples 6 and 7>

A polyester resin was produced in the same manner as in Example 1 except that the amount of ethylene glycol and the amount of neopentyl glycol were changed so that the charged ratios of total polyhydric alcohol components and total polycarboxylic acid components (total polyhydric alcohol components/total polycarboxylic acid components (molar ratio)) were 1.02 and 1.10, respectively. The composition of the resin, resin physical properties, and evaluation results are shown in Table 1.

<Example 10>

A reaction vessel equipped with a stirrer, a condenser, and a thermometer was charged with 196.5 parts of terephthalic acid, 474.2 parts of isophthalic acid, 7.8 parts of trimellitic anhydride, 27.1 parts of ethylene glycol, 263.6 parts of neopentyl glycol, 201.4 parts of 1,4-cyclohexanedimethanol, and 0.0051% by mol of TBT as a catalyst with respect to all acid components. Next, an esterification reaction (esterification step) was carried out while raising the temperature from 180°C to 240°C over 4 hours. Next, 0.019% by mol of zinc acetate dihydrate was charged with respect to the total acid components. Next, the pressure in the system was gradually reduced to 5 mmHg over 20 minutes, and a polycondensation reaction (polycondensation step) was further performed at 260°C for 80 minutes under a vacuum of 0.3 mmHg or less. Thereafter, the pressure reduction was stopped, the mixture was cooled to 220°C under a nitrogen stream, and 7.8 parts of trimellitic anhydride was added. The mixture was stirred at 220°C for 2 hours so as to perform carboxyl group modification (after-addition), thereby obtaining a polyester resin. The composition of the resin, resin physical properties, and evaluation results are shown in Table 1.

<Comparative Example 1>

A polyester resin was produced in the same manner as in Example 1 except that the charged amount of TBT was changed to 0.00024% by mol with respect to the total acid components and that the charged amount of zinc acetate dihydrate was changed to 0.017% by mol with respect to the total acid components. The reaction was stopped when the time of the polycondensation reaction reached 100 minutes. The composition of the resin, resin physical properties, and evaluation results are shown in Table 1.

<Comparative Example 5>

A polyester resin was produced in the same manner as in Example 7 except that the charged amount of zinc acetate dihydrate was changed to 0.00326% by mol with respect to the total acid components. The composition of the resin, resin physical properties, and evaluation results are shown in Table 1.

<Comparative Example 6>

A polyester resin was produced in the same manner as in Example 1 except that the procedure was changed. Specifically, in Comparative Example 6, zinc acetate dihydrate was added before the esterification reaction (esterification step). The composition of the resin, resin physical properties, and evaluation results are shown in Table 1.

<Comparative Example 7>

A polyester resin was produced in the same manner as in Example 1 except that the charged amount of TBT was changed to 0.056% by mol with respect to the total acid components and that zinc acetate dihydrate was not used. The composition of the resin, resin physical properties, and evaluation results are shown in Table 1.

[Table 1]

| charge | | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|---|
| charge | | glycol component / dicarboxylic acid component | [molar ratio] | 1.07 | 1.07 | 1.07 | 1.07 | 1.07 | 1.02 | 1.10 | 1.07 | 1.07 | 1.50 |
| | | productivity | [-] | o | o | o | o | o | o | o | o | o | o |
| polyester resin | monomer composition | TPA | [% by mol] | 30 | 30 | 30 | 30 | 30 | 30 | 30 | 30 | 60 | 29 |
| | | IPA | | 68.5 | 68.5 | 68.5 | 68.5 | 68.5 | 68.5 | 68.5 | 68.5 | 10 | 70 |
| | | SA | | | | | | | | | | 30 | |
| | | TMA | | 1.5 | 1.5 | 1.5 | 1.5 | 1.5 | 1.5 | 1.5 | 1.5 | | 1 |
| | | EG | | 50 | 50 | 50 | 50 | 50 | 50 | 50 | | 57 | 10 |
| | | NPG | | 50 | 50 | 50 | 50 | 50 | 50 | 50 | | 43 | 58 |
| | | CHDM | | | | | | | | | | | 32 |
| | | biomass EG | | | | | | | | | 50 | | |
| | | biomass NPG | | | | | | | | | 50 | | |
| | | TMA (after-addition) | | | | | | | | | | | 1 |
| | metal content | Ti | [ppm] | 5 | 10 | 2 | 5 | 5 | 5 | 5 | 5 | 5 | 10 |
| | | Zn | [ppm] | 71 | 70 | 70 | 100 | 50 | 70 | 71 | 72 | 70 | 53 |
| | | Sb | [ppm] | <1 | <1 | <1 | <1 | <1 | <1 | <1 | <1 | <1 | <1 |
| | properties | color tone (Co-b) | [-] | 1.0 | 2.1 | 0.7 | 1.3 | 0.9 | 1.0 | 1.0 | 1.0 | 1.1 | 5 |
| | | number of foreign bodies | [pieces/5 g] | 7 | 7 | 8 | 14 | 3 | 6 | 5 | 7 | 7 | 7 |
| | | unreacted TMA | [ppm] | 7 | 11 | 10 | 12 | 8 | 10 | 11 | 9 | - | 1918 |
| | | ηsp/c (initial stage) | [dl/g] | 0.63 | 0.60 | 0.61 | 0.59 | 0.60 | 0.51 | 0.70 | 0.60 | 0.53 | 0.57 |
| | | AV (initial stage) | [eq/t] | 55 | 58 | 57 | 59 | 55 | 180 | 44 | 54 | 60 | 85 |
| | | reduced viscosity retention | [%] | 95 | 95 | 96 | 90 | 97 | 90 | 97 | 95 | 80 | 95 |
| | | dissolution stability | [-] | o | o | o | o | o | o | o | o | o | × |
| | | adhesion to metal | [-] | o | o | o | o | o | o | Δ | o | o | o |
| | | phenol curability | [-] | o | o | o | o | o | o | Δ | o | o | o |
| | | NCO curability | [-] | o | o | o | o | o | o | o | o | o | o |

| charge | | | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|
| charge | | glycol component / dicarboxylic acid component | [molar ratio] | 1.07 | 1.07 | 1.07 | 1.07 | 1.10 | 1.07 | 1.07 |
| | | productivity | [-] | × | o | o | o | o | o | o |
| polyester resin | monomer composition | TPA | [% by mol] | 30 | 30 | 30 | 30 | 30 | 30 | 30 |
| | | IPA | | 68.5 | 68.5 | 68.5 | 68.5 | 68.5 | 68.5 | 68.5 |
| | | SA | | | | | | | | |
| | | TMA | | 1.5 | 1.5 | 1.5 | 1.5 | 1.5 | 1.5 | 1.5 |
| | | EG | | 50 | 50 | 50 | 50 | 50 | 50 | 50 |
| | | NPG | | 50 | 50 | 50 | 50 | 50 | 50 | 50 |
| | | CHDM | | | | | | | | |
| | | biomass EG | | | | | | | | |
| | | biomass NPG | | | | | | | | |
| | | TMA (after-addition) | | | | | | | | |
| | metal content | Ti | [ppm] | <1 | 45 | 5 | 5 | 5 | 5 | 125 |
| | | Zn | [ppm] | 71 | 70 | 10 | 200 | 10 | 100 | - |
| | | Sb | [ppm] | <1 | <1 | <1 | <1 | <1 | <1 | - |
| | properties | color tone (Co-b) | [-] | 0.5 | 15 | 1.0 | 15 | 1.0 | 0.8 | 30 |
| | | number of foreign bodies | [pieces/5 g] | 6 | 6 | 1 | × | 2 | × | - |
| | | unreacted TMA | [ppm] | 7 | 9 | 12 | 14 | 13 | 10 | 6 |
| | | ηsp/c (initial stage) | [dl/g] | 0.09 | 0.60 | 0.55 | 0.54 | 0.57 | 0.55 | 0.65 |
| | | AV (initial stage) | [eq/t] | 880 | 60 | 56 | 60 | 49 | 63 | 57 |
| | | reduced viscosity retention | [%] | 50 | 94 | 95 | 80 | 98 | 85 | 80 |
| | | dissolution stability | [-] | o | o | o | × | o | × | o |
| | | adhesion to metal | [-] | × | o | o | o | Δ | o | o |
| | | phenol curability | [-] | o | o | o | o | Δ | o | o |
| | | NCO curability | [-] | o | o | × | o | × | × | × |

In Table 1, the copolymerization components of the resin were represented using the following abbreviations.

TPA: terephthalic acid
IPA: isophthalic acid
SA: sebacic acid
TMA: trimellitic anhydride
EG: ethylene glycol
NPG: neopentyl glycol
CHDM: 1,4-cyclohexanedimethanol
biomass EG: biomass ethylene glycol (manufactured by India Glycols Ltd.)
biomass NPG: biomass neopentyl glycol (Neeture N40 manufactured by Perstorp)

Industrial Applicability

According to the present invention, it is possible to produce a polyester resin having good producibility and color tone, containing fewer foreign bodies, and showing excellent adhesion to metal and curability. This resin is excellent in adhesion to metal, curability, and storage stability and thus is suitable for an adhesive for dry lamination, particularly an adhesive for bonding a metal substrate such as an aluminum foil and a plastic film, and coating applications, particularly PCM (precoated metal) coating for metal plate coating and can coating.

**Claims**

1. A method for producing a polyester resin containing 2 to 10 ppm by mass of titanium in terms of metal and 50 to 100 ppm by mass of zinc in terms of metal, as measured in accordance with the method specified in the description, respectively, in which the number of foreign bodies contained in the polyester resin is 15 or less per 5 g of the polyester resin, as measured in accordance with the method specified in the description, wherein the foreign bodies contain 100% by mass of a zinc salt of a polycarboxylic acid and the major axis of the foreign bodies is 5 $\mu$m or more and 80 $\mu$m or less, the method comprising a step of producing a prepolymer in the presence of a titanium catalyst and in the absence of a zinc catalyst, and a step of performing polycondensation in the presence of the titanium catalyst and the zinc catalyst after the production of the prepolymer.

2. The production method according to claim 1, wherein the reduced viscosity in the polyester resin is 0.10 dl/g or more and the acid value in the polyester resin is 50 eq/t or more, as measured in accordance with the method specified in the description, respectively.

3. The production method according to claim 1 or 2, wherein the content of trimellitic anhydride in the polyester resin is 1,000 ppm by mass or less.

**Patentansprüche**

1. Verfahren zur Herstellung eines Polyesterharzes, enthaltend 2 bis 10 Massen-ppm Titan auf das Metall bezogen und 50 bis 100 Massen-ppm Zink auf das Metall bezogen, gemessen jeweils in Übereinstimmung mit dem in der Beschreibung angegebenen Verfahren, in welchem die Anzahl von in dem Polyesterharz enthaltenen Fremdkörpern 15 oder weniger pro 5 g des Polyesterharzes beträgt, gemessen in Übereinstimmung mit dem in der Beschreibung angegebenen Verfahren, wobei die Fremdkörper 100 Massen-% eines Zinksalzes einer Polycarbonsäure enthalten und die Hauptachse der Fremdkörper 5 $\mu$m oder mehr und 80 $\mu$m oder weniger beträgt, wobei das Verfahren einen Schritt des Herstellens eines Präpolymers in Anwesenheit eines Titankatalysators und in Abwesenheit eines Zinkkatalysators, und einen Schritt des Durchführens einer Polykondensation in Anwesenheit des Titankatalysators und des Zinkkatalysators nach der Herstellung des Präpolymers umfasst.

2. Herstellungsverfahren nach Anspruch 1, wobei die reduzierte Viskosität in dem Polyesterharz 0,10 dl/g oder mehr beträgt und der Säurewert in dem Polyesterharz 50 eq/t oder mehr beträgt, gemessen jeweils in Übereinstimmung mit dem in der Beschreibung angegebenen Verfahren.

3. Herstellungsverfahren nach Anspruch 1 oder 2, wobei der Gehalt von Trimellitsäureanhydrid in dem Polyesterharz 1000 Massen-ppm oder weniger beträgt.

**Revendications**

1. Procédé de production d'une résine de polyester contenant 2 à 10 ppm en masse de titane en termes de métal et 50 à 100 ppm en métal de zinc en termes de métal, telles que mesurées conformément au procédé spécifié dans la description, respectivement, dans lequel le nombre de corps étrangers contenus dans la résine de polyester est de 15 ou moins pour 5 g de la résine de polyester, tel que mesuré conformément au procédé spécifié dans la description, dans lequel les corps étrangers contiennent 100 % en masse d'un sel de zinc d'un acide polycarboxylique et l'axe majeur des corps étrangers est de 5 $\mu$m ou plus et 80 $\mu$m ou moins, le procédé comprenant une étape de production d'un prépolymère en présence d'un catalyseur de titane et en l'absence d'un catalyseur de zinc, et une étape de réalisation d'une polycondensation dans présence du catalyseur de titane et du catalyseur de zinc après la production du prépolymère.

2. Procédé de production selon la revendication 1, dans lequel la viscosité réduite dans la résine de polyester est de 0,10 dl/g ou plus et la valeur acide dans la résine de polyester est de 50 éq/t ou plus, telles que mesurées conformément au procédé spécifié dans la description, respectivement.

3. Procédé de production selon la revendication 1 ou 2, dans lequel la teneur en anhydride triméllitique dans la résine de polyester est de 1000 ppm en masse ou moins.

[FIG. 1]

**EP 4 112 696 B1**

**REFERENCES CITED IN THE DESCRIPTION**

**Patent documents cited in the description**

- JP 2003268087 A
- JP 2000159872 A
- JP 2009001656 A
- CN 107163232 A